(19) Europäisches Patentamt
European Patent Office
Office européen des brevets

(11) **EP 4 685 027 A1**

(12) **EUROPEAN PATENT APPLICATION**
published in accordance with Art. 153(4) EPC

(43) Date of publication:
**28.01.2026 Bulletin 2026/05**

(21) Application number: **24783950.9**

(22) Date of filing: **16.01.2024**

(51) International Patent Classification (IPC):
**B60W 60/00** (2020.01)

(52) Cooperative Patent Classification (CPC):
**B60W 50/00; B60W 60/00; G08G 1/09; G08G 1/16**

(86) International application number:
**PCT/CN2024/072505**

(87) International publication number:
**WO 2024/207865 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2023 CN 202310365649**

(71) Applicant: **Huawei Technologies Co., Ltd.
Shenzhen, Guangdong 518129 (CN)**

(72) Inventors:
• **XU, Yanchuan
Shenzhen, Guangdong 518129 (CN)**

• **MENG, Yue
Shenzhen, Guangdong 518129 (CN)**
• **CHEN, Yuying
Shenzhen, Guangdong 518129 (CN)**
• **LIU, Xiaoxue
Shenzhen, Guangdong 518129 (CN)**
• **CHENG, Siyuan
Shenzhen, Guangdong 518129 (CN)**

(74) Representative: **Isarpatent
Patent- und Rechtsanwälte Partg mbB
Friedrichstraße 31
80801 München (DE)**

(54) **SPEED RECOMMENDATION METHOD AND RELATED DEVICE**

(57) Embodiments of this application provide a speed recommendation method and a related device, and relate to the driving field. In the method, a fused feature and lateral decision information of a first vehicle are obtained by using driving data of the first vehicle in a first time period, to determine speed recommendation information of the first vehicle based on the fused feature and the lateral decision information. Because the driving data of the first vehicle is human driving behavior data, the speed recommendation method in embodiments of this application may provide a human-like speed planning service, to obtain the speed recommendation information of the first vehicle, and the speed recommendation information may be used to implement human-like driving control. This effectively helps improve traffic efficiency, and can also ensure driving safety.

```
┌──────────────────────────────────────────────────────────┐
│  Obtain driving data of a first vehicle in a first time period │ ─── 301
└──────────────────────────────────────────────────────────┘
                            │
                            ▼
┌──────────────────────────────────────────────────────────┐
│  Determine speed recommendation information of the first vehicle │ ─── 302
│               based on the driving data                    │
└──────────────────────────────────────────────────────────┘
                            │
                            ▼
┌──────────────────────────────────────────────────────────┐
│  Output the speed recommendation information of the first vehicle │ ─── 303
└──────────────────────────────────────────────────────────┘
```

FIG. 3

EP 4 685 027 A1

## Description

This application claims priority to Chinese Patent Application No. 202310365649.2, filed with the China National Intellectual Property Administration on April 3, 2023 and entitled "SPEED RECOMMENDATION METHOD AND RELATED DEVICE", which is incorporated herein by reference in its entirety.

## TECHNICAL FIELD

Embodiments of this application relate to the driving field, and in particular, to a speed recommendation method and a related device.

## BACKGROUND

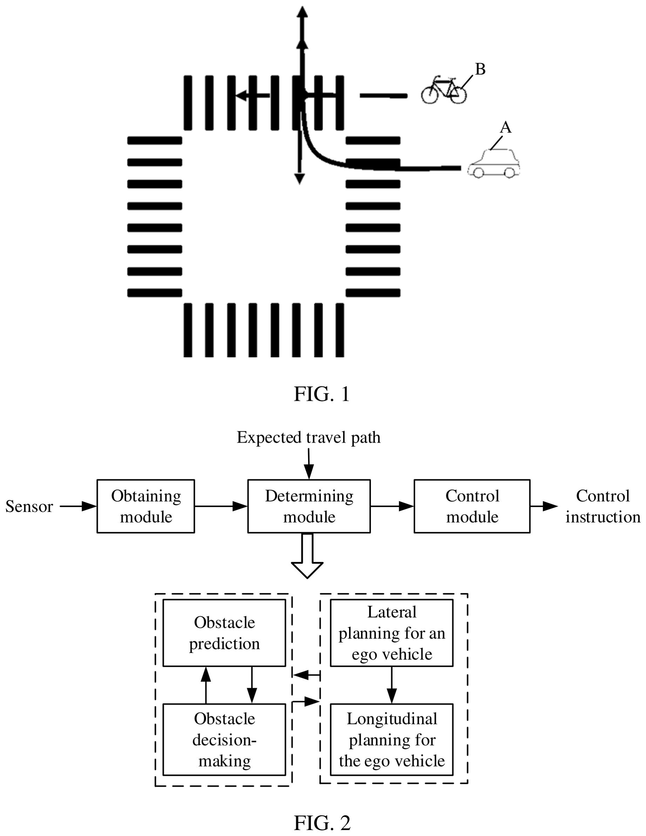

As a most indispensable module of an autonomous driving system, a speed decision-making and planning module for autonomous driving makes a decision and a plan on a next-step longitudinal behavior of an ego vehicle based on a historical motion status and surrounding traffic environment information of the ego vehicle. For example, when a traffic participant is crossing a road at an intersection, the speed decision-making and planning module decides whether the ego vehicle decelerates to yield or accelerates to pass. In addition, in many autonomous driving traffic scenarios, a competing/yielding relationship between the ego vehicle and another obstacle is not clear. FIG. 1 is a diagram of a risk speed reduction scenario according to an embodiment of this application. An ego vehicle A is ready to turn right on a right-turn lane, and there is a rider B on a non-motor vehicle lane nearby. It is estimated that the ego vehicle A and the rider B arrive at an intersection at the same moment. However, an autonomous driving system cannot learn of a real intention of the rider B at the current moment. If the rider B goes straight or turns left at the intersection, the rider B and a planned path of the ego vehicle A cross. If the rider B and the ego vehicle A turn right, there is no path conflict.

In this scenario, if a potential conflict obstacle is ignored and acceleration is performed to pass, if the real intention of the rider B conflicts with the planned path of the ego vehicle A, because the ego vehicle A has a high speed, the ego vehicle A may not be able to decelerate, and a collision is caused. However, if direct deceleration is selected to yield to the potential conflict obstacle (for example, the rider B), it leads to premature braking, traffic efficiency is poor, and user experience is poor.

## SUMMARY

This application provides a speed recommendation method and a related device, so that human-like speed recommendation information can be provided, to improve traffic efficiency and ensure driving safety.

According to a first aspect, this application provides a speed recommendation method, and the method includes the following steps: obtaining driving data of a first vehicle in a first time period; determining speed recommendation information of the first vehicle based on the driving data. The speed recommendation information is obtained based on a fused feature and lateral decision information of the first vehicle, the fused feature is obtained by performing fused feature extraction on the driving data, and the lateral decision information is obtained based on the driving data.

In this solution, the fused feature and the lateral decision information of the first vehicle are obtained by using the driving data of the first vehicle, to determine the speed recommendation information of the first vehicle based on the fused feature and the lateral decision information. Because the driving data of the first vehicle is human driving behavior data, the speed recommendation method in this embodiment of this application may provide a human-like speed planning service, to obtain the speed recommendation information of the first vehicle, and the speed recommendation information may be used to implement human-like driving control. This effectively helps improve traffic efficiency, and can also ensure driving safety.

In a possible implementation of the first aspect, the speed recommendation method further includes: outputting the speed recommendation information of the first vehicle.

It can be learned that in this solution, the speed recommendation information of the first vehicle is output to perform other processing (for example, autonomous driving control), or is output to a user, so that the user drives the first vehicle based on the speed recommendation information, to assist the user in driving, and improve driving experience.

In a possible implementation of the first aspect, the driving data includes driving status information and driving environment information of the first vehicle.

In this solution, the driving data is various data related to a vehicle driving scenario. For example, the driving data includes the driving status information and the driving environment information of the first vehicle. The driving status information is information related to a driving status of the first vehicle, for example, information such as a length, a width, a height, a type, and a location of the vehicle. The driving environment information is information related to a driving environment that the first vehicle is in, for example, information such as a road on which the first vehicle is located, a traffic light, and a traffic participant other than the first vehicle in the driving environment.

In a possible implementation of the first aspect, the driving environment information includes at least one of the following: road topology information, traffic light information, and driving status information of a traffic participant.

In a possible implementation of the first aspect, the driving data further includes an expected travel path of the first vehicle. The expected travel path may be understood as a navigation path, that is, a target travel path of the first vehicle.

In a possible implementation of the first aspect, the speed recommendation information includes a recommended speed corresponding to a first moment and/or a recommendation probability of a speed partition corresponding to the first moment. The first moment is after the first time period, that is, the first moment is a future moment. The speed partition is obtained by dividing a speed interval based on a preset spacing. The preset spacing may be an equal spacing or an unequal spacing, and may be set according to an actual situation. This is not limited herein. The speed interval is a speed range determined based on a time length, a speed of the first vehicle at a cut-off moment of the first time period, a maximum longitudinal acceleration of the first vehicle, and a minimum longitudinal acceleration of the first vehicle. The time length is a difference between the first moment and the cut-off moment. The recommendation probability of the speed partition is a probability that a speed constraint interval of the first vehicle at the first moment is in the speed partition.

In this solution, the speed recommendation information of the first vehicle includes the recommended speed corresponding to the first moment and/or the recommendation probability of the speed partition corresponding to the first moment. In addition, the speed constraint interval is a constraint interval that a speed of the first vehicle needs to meet at the first moment, or may be understood as a recommended interval of a speed of the first vehicle at the first moment. That the speed constraint interval is in the speed partition means that the speed constraint interval is less than or equal to the speed partition.

In a possible implementation of the first aspect, the speed recommendation method further includes: determining a travel speed of the first vehicle based on the speed recommendation information of the first vehicle.

It can be learned that in this solution, after the speed recommendation information of the first vehicle is determined, the travel speed of the first vehicle may be further determined based on the speed recommendation information, and the travel speed is a control speed applied to the first vehicle during autonomous driving.

In a possible implementation of the first aspect, the determining a travel speed of the first vehicle based on the speed recommendation information of the first vehicle includes: determining the travel speed based on the speed recommendation information of the first vehicle when a risk value of the first vehicle is greater than or equal to a risk threshold, where the risk value of the first vehicle represents a driving risk degree of the first vehicle.

It can be learned that in this solution, determining of the risk value of the first vehicle is added, and the risk threshold is used as a determining threshold. The travel speed is determined based on the speed recommendation information of the first vehicle only when the risk value of the first vehicle is greater than or equal to the risk threshold. A possible method for determining the travel speed is provided to meet different scenario requirements.

In a possible implementation of the first aspect, when the driving environment information includes the driving status information of the traffic participant, the risk value of the first vehicle is a risk value of each traffic participant in the traffic participant, and the risk value of the traffic participant represents a possibility that the traffic participant collides with the first vehicle.

In this case, the determining the travel speed based on the speed recommendation information of the first vehicle when a risk value of the first vehicle is greater than or equal to a risk threshold includes: determining the travel speed based on the speed recommendation information of the first vehicle when a risk value of at least one traffic participant is greater than or equal to the risk threshold.

It can be learned that in this solution, the risk value of each traffic participant in the driving environment of the first vehicle is used as the risk value of the first vehicle. The travel speed is determined based on the speed recommendation information of the first vehicle when the risk value of the at least one traffic participant is greater than or equal to the risk threshold.

In a possible implementation of the first aspect, when the driving environment information includes the driving status information of the traffic participant, the risk value of the first vehicle is obtained based on a risk value of the traffic participant, and the risk value of the traffic participant represents a possibility that the traffic participant collides with the first vehicle.

It can be learned that in this solution, the risk value of the first vehicle may be obtained by performing processing based on the risk value of each traffic participant in the driving environment of the first vehicle. The processing includes an addition operation or a weighting operation. For the addition operation, a sum of risk values of traffic participants in the driving environment of the first vehicle is obtained and used as the risk value of the first vehicle. For the weighting operation, a specific weight may be assigned to each traffic participant, and then a weighted operation value, that is, the risk value of the first vehicle, may be obtained based on the risk value and the corresponding weight of the traffic participant.

In a possible implementation of the first aspect, the risk value of the traffic participant is a product of an interaction weight of the traffic participant and a risk score of the traffic participant. The interaction weight of the traffic participant represents impact of the traffic participant on the first vehicle. The risk score of the traffic participant is a risk evaluation value obtained based on various driving risk evaluation indicators.

In a possible implementation of the first aspect, when the driving environment information includes the driving status information of the traffic participant, before the determining speed recommendation information of the first vehicle, the speed recommendation method further includes: determining the lateral decision information of the first vehicle based on the driving data and a predicted travel path of the traffic participant at the first moment, where the predicted travel path is determined based on the driving data, and the first moment is after the first time period.

It can be learned that in this solution, the lateral decision information of the first vehicle may be determined based on the driving data. For example, the lateral decision information of the first vehicle is determined based on the driving data and the predicted travel path of the traffic participant at the first moment.

In a possible implementation of the first aspect, the speed recommendation information of the first vehicle includes N pieces of speed recommendation information, where N is an integer greater than or equal to 1; and the determining speed recommendation information of the first vehicle based on the driving data includes: determining N pieces of candidate lateral decision information of the first vehicle based on the driving data; and obtaining, based on the fused feature and the N pieces of candidate lateral decision information, the N pieces of speed recommendation information respectively corresponding to the N pieces of candidate lateral decision information.

It can be learned that in this solution, one piece of speed recommendation information may be provided for each piece of candidate lateral decision information, to expand a scope of a speed planning service.

In a possible implementation of the first aspect, the determining speed recommendation information of the first vehicle based on the driving data includes: determining N pieces of candidate lateral decision information of the first vehicle based on the driving data, where N is an integer greater than or equal to 1; obtaining, based on the fused feature and the N pieces of candidate lateral decision information, N pieces of speed recommendation information respectively corresponding to the N pieces of candidate lateral decision information; and determining that one piece of speed recommendation information corresponding to the lateral decision information of the first vehicle in the N pieces of speed recommendation information is the speed recommendation information of the first vehicle.

It can be learned that in this solution, the N pieces of speed recommendation information respectively corresponding to the N pieces of candidate lateral decision information may be first determined, and then one piece of speed recommendation information corresponding to the lateral decision information of the first vehicle is determined from the N pieces of speed recommendation information as the speed recommendation information of the first vehicle.

According to a second aspect, this application further provides a speed recommendation apparatus.

The apparatus includes an obtaining module and a determining module.

The obtaining module is configured to obtain driving data of a first vehicle in a first time period.

The determining module is configured to determine speed recommendation information of the first vehicle based on the driving data.

The speed recommendation information is obtained based on a fused feature and lateral decision information of the first vehicle, the fused feature is obtained by performing fused feature extraction on the driving data, and the lateral decision information is obtained based on the driving data.

In this solution, the speed recommendation apparatus obtains the fused feature and the lateral decision information of the first vehicle by using the driving data of the first vehicle, to determine the speed recommendation information of the first vehicle based on the fused feature and the lateral decision information. Because the driving data of the first vehicle is human driving behavior data, the speed recommendation apparatus in this embodiment of this application may provide a human-like speed planning service, to obtain the speed recommendation information of the first vehicle, and the speed recommendation information may be used to implement human-like driving control. This effectively helps improve traffic efficiency, and can also ensure driving safety.

In a possible implementation of the second aspect, the speed recommendation apparatus further includes an output module. The output module is configured to output the speed recommendation information of the first vehicle.

In a possible implementation of the second aspect, the driving data includes driving status information and driving environment information of the first vehicle.

In a possible implementation of the second aspect, the driving environment information includes at least one of the following: road topology information, traffic light information, and driving status information of a traffic participant.

In a possible implementation of the second aspect, the driving data further includes an expected travel path of the first vehicle.

In a possible implementation of the second aspect, the speed recommendation information includes a recommended speed corresponding to a first moment and/or a recommendation probability of a speed partition corresponding to the first moment. The first moment is after the first time period.

The speed partition is obtained by dividing a speed interval based on a preset spacing, the speed interval is a speed range determined based on a time length, a speed of the first vehicle at a cut-off moment of the first time period, a maximum longitudinal acceleration of the first vehicle, and a minimum longitudinal acceleration of the first vehicle, the time length is a difference between the first moment and the cut-off moment, and the recommendation probability of the speed partition is a probability that a speed constraint interval of the first vehicle at the first moment is in the speed partition.

In a possible implementation of the second aspect, the speed recommendation apparatus further includes a control module. The control module is configured to determine a travel speed of the first vehicle based on the speed recommendation information of the first vehicle.

In a possible implementation of the second aspect, in the aspect of determining the travel speed of the first vehicle based on the speed recommendation information of the first vehicle, the control module is specifically configured to determine the travel speed based on the speed recommendation information of the first vehicle when a risk value of the first vehicle is greater than or equal to a risk threshold, where the risk value of the first vehicle represents a driving risk degree of the first vehicle.

In a possible implementation of the second aspect, when the driving environment information includes the driving status information of the traffic participant, the risk value of the first vehicle is a risk value of each traffic participant in the traffic participant, and the risk value of the traffic participant represents a possibility that the traffic participant collides with the first vehicle.

Correspondingly, in the aspect of determining the travel speed based on the speed recommendation information of the first vehicle when the risk value of the first vehicle is greater than or equal to the risk threshold, the control module is specifically configured to determine the travel speed based on the speed recommendation information of the first vehicle when a risk value of at least one traffic participant is greater than or equal to the risk threshold.

In a possible implementation of the second aspect, when the driving environment information includes the driving status information of the traffic participant, the risk value of the first vehicle is obtained based on a risk value of the traffic participant, and the risk value of the traffic participant represents a possibility that the traffic participant collides with the first vehicle.

In a possible implementation of the second aspect, the risk value of the traffic participant is a product of an interaction weight of the traffic participant and a risk score of the traffic participant. The interaction weight of the traffic participant represents impact of the traffic participant on the first vehicle. The risk score of the traffic participant is a risk evaluation value obtained based on various driving risk evaluation indicators.

In a possible implementation of the second aspect, when the driving environment information includes the driving status information of the traffic participant, the determining module is further configured to: before determining the speed recommendation information of the first vehicle, determine the lateral decision information of the first vehicle based on the driving data and a predicted travel path of the traffic participant at the first moment, where the predicted travel path is determined based on the driving data, and the first moment is after the first time period.

In a possible implementation of the second aspect, the speed recommendation information of the first vehicle includes N pieces of speed recommendation information, where N is an integer greater than or equal to 1; and in the aspect of determining the speed recommendation information of the first vehicle based on the driving data, the determining module is specifically configured to: determine N pieces of candidate lateral decision information of the first vehicle based on the driving data; and obtain, based on the fused feature and the N pieces of candidate lateral decision information, the N pieces of speed recommendation information respectively corresponding to the N pieces of candidate lateral decision information.

In a possible implementation of the second aspect, in the aspect of determining the speed recommendation information of the first vehicle based on the driving data, the determining module is specifically configured to: determine N pieces of candidate lateral decision information of the first vehicle based on the driving data, where N is an integer greater than or equal to 1; obtain, based on the fused feature and the N pieces of candidate lateral decision information, N pieces of speed recommendation information respectively corresponding to the N pieces of candidate lateral decision information; and determine that one piece of speed recommendation information corresponding to the lateral decision information of the first vehicle in the N pieces of speed recommendation information is the speed recommendation information of the first vehicle.

According to a third aspect, this application further provides a speed recommendation device, including a processor and a memory. The processor is connected to the memory, the memory is configured to store program code, and the processor is configured to invoke the program code, to perform the speed recommendation method according to the first aspect.

According to a fourth aspect, this application further provides a computer-readable storage medium. The computer-readable storage medium stores a computer program, and the computer program is executed by a processor, to implement the speed recommendation method according to the first aspect.

According to a fifth aspect, this application further provides a computer program product including instructions. When the computer program product runs on a computer, the computer is enabled to perform the speed recommendation method according to the first aspect.

According to a sixth aspect, this application further provides a chip. The chip includes a processor and a data interface, and the processor reads, through the data interface, instructions stored in a memory, to perform the speed recommendation method according to the first aspect.

Optionally, in an implementation, the chip may further include the memory. The memory stores the instructions. The processor is configured to execute the instructions stored in the memory. When the instructions are executed, the processor is configured to perform the speed recommendation method according to the first aspect.

## BRIEF DESCRIPTION OF DRAWINGS

The accompanying drawings used in embodiments of this application are described below.

FIG. 1 is a diagram of a risk speed reduction scenario according to an embodiment of this application;
FIG. 2 is a diagram of an application system architecture of a speed recommendation method according to an embodiment of this application;
FIG. 3 is a flowchart of a speed recommendation method according to an embodiment of this application;
FIG. 4 is a diagram of speed recommendation information according to an embodiment of this application;
FIG. 5 is a diagram of application of a speed recommendation method according to an embodiment of this application;
FIG. 6 is a diagram of a fused feature extraction model and a speed decoding network according to an embodiment of this application;
FIG. 7 is a diagram of a structure of an apparatus according to an embodiment of this application; and
FIG. 8 is a diagram of a structure of a speed recommendation device according to an embodiment of this application.

## DESCRIPTION OF EMBODIMENTS

In embodiments of this application, an expression such as "example" or "for example" represents giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. Sequence numbers of steps (for example, step S1 and step S21) in embodiments of this application are merely used to distinguish between different steps, and do not limit a sequence of performing the steps.

In addition, unless otherwise specified, ordinal numbers such as "first" and "second" in embodiments of this application are used to distinguish between a plurality of objects, but are not intended to limit an order, a time sequence, priorities, or degrees of importance of the plurality of objects. For example, a first device and a second device are merely for ease of description, and do not indicate a difference of the first device and the second device in terms of a structure and importance. In some embodiments, the first device and the second device may alternatively be a same device.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

The following describes technical solutions of this application with reference to the accompanying drawings.

For ease of understanding, the following first describes related concepts such as related terms in embodiments of this application.

(1) Risk speed reduction

The risk speed reduction is to reduce a vehicle speed of an ego vehicle in advance to avoid a collision with another obstacle in complex and changeable traffic scenarios.

(2) Lateral decision

The lateral decision is a decision made by an autonomous driving vehicle on a future travel path.

(3) Road topology

A definition of the road topology is represented in road network data by using a data structure in an "arc-node" form. An arc segment is defined by two endpoints, which are respectively a start node indicating a start location of the arc segment and an end node indicating an end location of the arc segment. This is referred to as an arc-node topology. Due to this structure, provided that road segments are connected end-to-end without any break, connectivity of a road network can be ensured.

### (4) Mixture of experts

The mixture of experts (Mixture of Experts, MoE) is an integrated learning technology developed in the field of a neural network (Neural Network, NN). During training of a conventional deep learning model, an entire network participates in computing for each input sample. As the model becomes larger, more sample data is used for training, and the training overheads become increasingly unbearable. The MoE can dynamically activate a part of the neural network, to greatly increase a quantity of model parameters without increasing a computing amount. The MoE technology is currently a key technology for training a trillion-parameter scale model. The MoE divides a prediction modeling task into several subtasks, trains an expert model (Expert Model) on each subtask, where each expert model is referred to as an expert, and develops a gating model (Gating Model). The model learns and trusts a specific expert based on an input to be predicted and combines prediction results.

### (5) Model pre-training

The model pre-training means training a general network model structure by using as much training data as possible.

### (6) Model fine-tuning

The model fine-tuning means training some parameters of a model based on pre-trained network model parameters.

As a most indispensable module of an autonomous driving system, a speed decision-making and planning module for autonomous driving makes a decision and a plan on a next-step longitudinal behavior of an ego vehicle based on a historical motion status and surrounding traffic environment information of the ego vehicle. For example, when a traffic participant is crossing a road at an intersection, the speed decision-making and planning module decides whether the ego vehicle decelerates to yield or accelerates to pass. In addition, in many autonomous driving traffic scenarios, a competing/yielding relationship between the ego vehicle and another obstacle is not clear. In this scenario, if a potential conflict obstacle is ignored and acceleration is performed to pass, if the real intention of the rider conflicts with the planned path of the ego vehicle, because the ego vehicle has a high speed, the ego vehicle may not be able to decelerate, and a collision is caused. However, if direct deceleration is selected to yield to the potential conflict obstacle (for example, the rider), it leads to premature braking, traffic efficiency is poor, and user experience is poor.

Therefore, this application provides a speed recommendation method, so that human-like speed recommendation information can be provided, to improve traffic efficiency and ensure driving safety. The speed recommendation method in embodiments of this application may be applied to a speed recommendation apparatus or a speed recommendation device, and may be applied to the speed recommendation apparatus or the speed recommendation device, or may be applied to a chip in the speed recommendation apparatus or the speed recommendation device. For example, hardware in the speed recommendation apparatus or the speed recommendation device includes a central processing unit (Central Processing Unit, CPU), a graphics processing unit (Graphics Processing Unit, GPU), and a memory, and software in the speed recommendation apparatus or the speed recommendation device includes a computer program corresponding to the speed recommendation method in embodiments of this application, and the like.

FIG. 2 is a diagram of an application system architecture of a speed recommendation method according to an embodiment of this application. The application system architecture corresponding to the speed recommendation method in embodiments of this application includes an obtaining module, a determining module, and a control module. The determining module further includes an obstacle prediction part, an obstacle decision-making part, a lateral planning part for an ego vehicle, and a longitudinal planning part for the ego vehicle. Specific functions of the modules are described as follows:

The obtaining module is configured to process and fuse sensor information, and output driving data of the ego vehicle, including driving status information (a location, an orientation, and the like) of the ego vehicle, driving status information (such as a location, an orientation, a speed, a length, and a width) of an obstacle (an obstacle in a driving environment of the ego vehicle, which may also be understood as a traffic participant other than the ego vehicle, such as a pedestrian, a rider, or a vehicle), a road topology, a traffic light, and other information.

The obstacle prediction part in the determining module is configured to output, based on information such as the obstacle status information and the road topology that are obtained by the obtaining module, a predicted travel path of the traffic participant in a future time period.

The obstacle decision part in the determining module is configured to make a competing/yielding decision on the obstacle based on the predicted travel path and navigation information (that is, an expected travel path) of the ego vehicle.

The lateral planning part for the ego vehicle in the determining module is configured to plan a future travel path of the ego vehicle based on the driving data and the predicted travel path, and determine lateral decision information of the ego vehicle. The lateral decision information is result information of a lateral decision made by the ego vehicle, that is, lateral path line type.

The longitudinal planning part for the ego vehicle in the determining module is configured to determine speed recommendation information of the ego vehicle based on the driving data, including a recommended speed corresponding to a first moment and/or a recommendation probability of a speed partition corresponding to the first moment, where the first moment is a future moment, and there may be one or more first moments.

The control module is configured to plan a future travel speed of the ego vehicle based on a result output by the determining module according to an automatic control system principle, and output a control instruction to control the ego vehicle to complete a driving task.

For example, the speed recommendation method in embodiments of this application is in the longitudinal planning part for the ego vehicle in the determining module, and may be loaded in a form of software.

The following specifically describes the speed recommendation method provided in embodiments of this application.

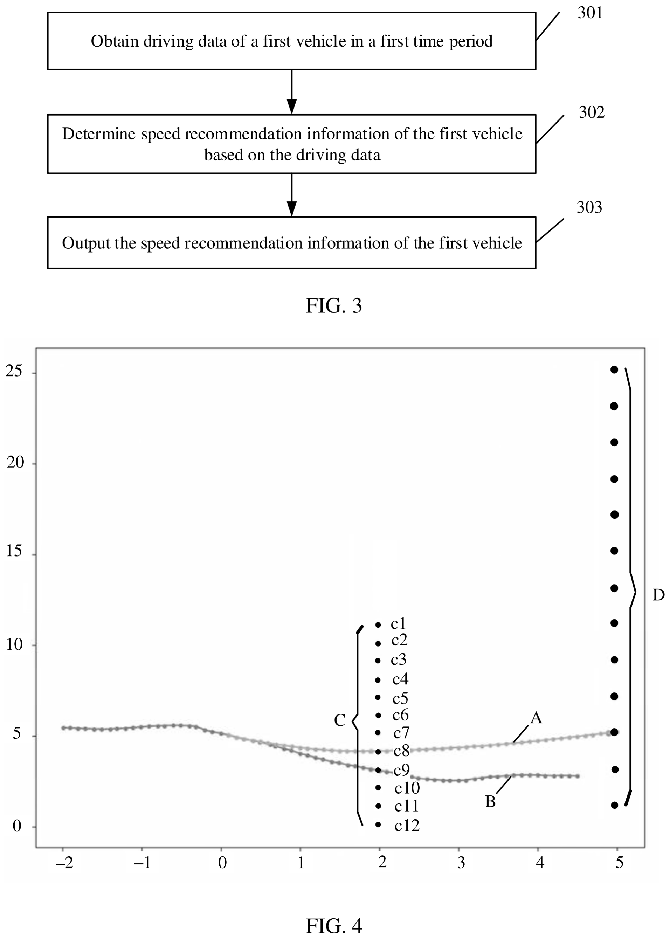

FIG. 3 is a flowchart of a speed recommendation method according to an embodiment of this application. The speed recommendation method includes the following steps.

301: Obtain driving data of a first vehicle in a first time period.

Specifically, the first time period may be one moment or a plurality of moments, and the plurality of moments may be a plurality of consecutive or non-consecutive moments. The driving data is various data related to a vehicle driving scenario.

302: Determine speed recommendation information of the first vehicle based on the driving data.

The speed recommendation information is obtained based on a fused feature and lateral decision information of the first vehicle, and the fused feature is obtained by performing fused feature extraction on the driving data.

Specifically, the fused feature has various features of the driving data. Feature extraction may be first performed on the various features of the driving data, and then feature fusion processing is performed to obtain the fused feature. Alternatively, fused feature extraction may be directly performed on the driving data. The lateral decision information is obtained by performing processing based on the driving data.

In this embodiment of this application, the fused feature and the lateral decision information of the first vehicle are obtained by using the driving data of the first vehicle, to determine the speed recommendation information of the first vehicle based on the fused feature and the lateral decision information. Because the driving data of the first vehicle is human driving behavior data, the solution in this embodiment of this application may provide a human-like speed planning service, to obtain the speed recommendation information of the first vehicle, and the speed recommendation information may be used to implement human-like driving control. This effectively helps improve traffic efficiency, and can also ensure driving safety.

In a possible implementation, with reference to FIG. 3, the speed recommendation method further includes:

303: Output the speed recommendation information of the first vehicle.

Specifically, the output may be an output to another module of a speed recommendation apparatus, another module of a speed recommendation device, another apparatus, or another device for subsequent processing. Alternatively, the output may be a display output (for example, an output in a format such as a picture, a video, or an animation), a voice output (that is, broadcasting the speed recommendation information by using a voice), or a light output (for example, a light flashing output or a light display graphic output).

For example, the speed recommendation device or the speed recommendation apparatus may be a head unit, and the display output, the voice output, or the light output may be implemented by the head unit. For example, the display output is performed in a human-machine interaction interface (Human-Machine Interface, HMI) of the head unit, the voice output is performed by using a microphone of the head unit, or the light output is performed by using a light emitting device in the head unit.

In the solution in this embodiment of this application, the speed recommendation information of the first vehicle is output to perform other processing (for example, autonomous driving control), or is output to a user. A human-like speed planning capability of an autonomous driving planning and control system in a risk speed reduction scenario can be improved by using the speed recommendation information. An autonomous driving system may use the speed recommendation information as speed reference information to continuously guide a speed of the first vehicle. Alternatively, the user can drive the first vehicle based on the speed recommendation information, to assist the user in driving, and effectively improve driving experience.

In a possible implementation, the driving data includes driving status information and driving environment information of the first vehicle.

Specifically, the driving status information is information related to a driving status of the first vehicle, for example, information such as a length, a width, a height, a type, and a location of the first vehicle.

The driving environment information is information related to a driving environment that the first vehicle is in, for example, information such as a road on which the first vehicle is located, a traffic light, and a traffic participant other than the first vehicle in the driving environment. For example, the driving environment information includes at least one of the following: road topology information, traffic light information, and driving status information of a traffic participant. The road topology information is topology information of a road around the first vehicle. The driving status information of the traffic participant is information related to a driving status of the traffic participant, for example, information such as a length, a width, a height, a type, and a location of a vehicle; for another example, location information of a pedestrian; for another example, a location of a rider.

In a possible implementation, the driving data further includes an expected travel path of the first vehicle. The expected travel path may be understood as a navigation path, that is, a target travel path of the first vehicle.

In a possible implementation, the speed recommendation information includes a recommended speed corresponding to a first moment and/or a recommendation probability of a speed partition corresponding to the first moment. The first moment is after the first time period, that is, the first moment is a future moment. In addition, there may be one or more first moments. When there are a plurality of first moments, the plurality of first moments may be a plurality of equal-spacing or unequal-spacing moments, and a recommended speed trajectory (or curve) of the first vehicle may be obtained based on recommended speeds corresponding to the plurality of first moments. FIG. 4 is a diagram of speed recommendation information according to an embodiment of this application. A curve B is a real speed curve of a first vehicle, and a curve A is a recommended speed curve.

The speed partition is obtained by dividing a speed interval based on a preset spacing. The preset spacing may be an equal spacing or an unequal spacing, and may be set according to an actual situation. This is not limited herein. The speed interval is a speed range determined based on a time length t, a speed v of the first vehicle at a cut-off moment of the first time period, a maximum longitudinal acceleration Amax of the first vehicle, and a minimum longitudinal acceleration Amin of the first vehicle. The time length t is a difference between the first moment and the cut-off moment. The recommendation probability of the speed partition is a probability that a speed constraint interval of the first vehicle at the first moment is in the speed partition. The speed constraint interval is a constraint interval that a speed of the first vehicle needs to meet at the first moment, or may be understood as a recommended interval of a speed of the first vehicle at the first moment. That the speed constraint interval is in the speed partition means that the speed constraint interval is less than or equal to the speed partition. A specific size of the speed constraint interval of the first vehicle may be set according to an actual situation, and is not specially limited.

Specifically, the speed interval is (v-t*Amin) to (v+t*Amax). Assuming that the cut-off moment is a moment "0" on a horizontal axis, and the first moment is a moment "2" on the horizontal axis, the time length t is 2 seconds (s), the speed interval is (v-2Amin) to (v+2Amax), and the speed interval is divided based on a preset spacing, to obtain a speed partition corresponding to the time length t of 2 seconds, as "C" in FIG. 4.
Similarly, assuming that the first moment is a moment "5" on the horizontal axis, the time length t is 5 seconds (s), the speed interval is (v-5Amin) to (v+5Amax), and the speed interval is divided based on a preset spacing, to obtain a speed partition corresponding to the time length t of 5 seconds, as "D" in FIG. 4.

For example, when a recommendation probability of each speed partition is output, the recommendation probability may be output in a form of a value, or may be output in a color shade. With reference to the speed partition in "C" in FIG. 4, a specific value of the recommendation probability may be output next to a dashed line point, for example, "c1, c2, c3, ..., c12", where a sum of values of c1 to c12 is 1. Alternatively, a color shade of a dashed line point may represent a value of a recommendation probability. For example, a deeper color of a dashed line point indicates a higher recommendation probability of a corresponding speed partition, and a lighter color of a dashed line point indicates a lower recommendation probability of a corresponding speed partition.

For example, the speed recommendation information in step 302 may be speed recommendation information corresponding to the lateral decision information of the first vehicle. The lateral decision information of the first vehicle may be determined based on the driving data of the first time period. The lateral decision information may also be understood as a path on which the first vehicle is to travel in the future. Alternatively, the speed recommendation information in step 302 may be a plurality of pieces of speed recommendation information corresponding to a plurality of pieces of candidate lateral decision information of the vehicle (that is, a plurality of possible paths on which the first vehicle may travel in the future, where the plurality of pieces of candidate lateral decision information include the lateral decision information of the first vehicle).

In a possible implementation, when the driving environment information includes the driving status information of the traffic participant, before the determining speed recommendation information of the first vehicle, the speed recommendation method further includes: determining the lateral decision information of the first vehicle based on the driving data and a predicted travel path of the traffic participant at the first moment. The predicted travel path is determined based on the driving data, and the first moment is after the first time period.

In this embodiment of this application, the predicted travel path of the traffic participant at the first moment may be predicted based on the driving data, and a method for predicting the travel path of the traffic participant is not specially limited. The lateral decision information of the first vehicle may be determined based on the driving data. For example, the lateral decision information of the first vehicle is determined based on the driving data and the predicted travel path of the traffic participant at the first moment. For example, the path on which the first vehicle is to travel in the future, that is, the lateral decision information, may be determined in consideration of a predicted travel path of another traffic participant in the driving environment with reference to the driving data (including the driving status of the first vehicle, the traffic light, and the like). Then, the speed recommendation information corresponding to the lateral decision information is determined based on the lateral decision information of the first vehicle.

In a possible implementation, in addition to a method for directly determining, based on the lateral decision information of the first vehicle, the speed recommendation information corresponding to the lateral decision information, the speed recommendation information corresponding to the lateral decision information of the first vehicle may be further determined by using the following method. Specifically, step 302 includes the following steps.

321: Determine N pieces of candidate lateral decision information of the first vehicle based on the driving data, where N is an integer greater than or equal to 1.

322: Obtain, based on the fused feature and the N pieces of candidate lateral decision information, N pieces of speed recommendation information respectively corresponding to the N pieces of candidate lateral decision information.

323. Determine that one piece of speed recommendation information corresponding to the lateral decision information of the first vehicle in the N pieces of speed recommendation information is the speed recommendation information of the first vehicle.

Specifically, because the lateral decision information of the first vehicle is one of the N pieces of candidate lateral decision information, the speed recommendation information corresponding to the lateral decision information of the first vehicle, that is, the speed recommendation information of the first vehicle, may be matched from the N pieces of speed recommendation information.

In a possible implementation, the speed recommendation information of the first vehicle includes N pieces of speed recommendation information, where N is an integer greater than or equal to 1. Step 302 includes the following steps.

324: Determine N pieces of candidate lateral decision information of the first vehicle based on the driving data.

325: Obtain, based on the fused feature and the N pieces of candidate lateral decision information, the N pieces of speed recommendation information respectively corresponding to the N pieces of candidate lateral decision information.

Specifically, for each piece of candidate lateral decision information, speed recommendation information corresponding to the candidate lateral decision information is determined, and the N pieces of speed recommendation information may be obtained.

In this embodiment of this application, one piece of speed recommendation information is provided for each piece of candidate lateral decision information, to expand a scope of a speed planning service of the speed recommendation method in this embodiment of this application.

In a possible implementation, the foregoing speed recommendation method further includes: determining a travel speed of the first vehicle based on the speed recommendation information of the first vehicle.

In this embodiment of this application, after the speed recommendation information of the first vehicle is determined, the travel speed of the first vehicle may be further determined based on the speed recommendation information, and the travel speed is a control speed applied to the first vehicle during autonomous driving. A specific method for determining the travel speed is not specially limited. For example, when the speed recommendation information includes the recommended speed corresponding to the first moment and the recommendation probability of the speed partition corresponding to the first moment, the recommended speed is used as an initial value, and the speed partition is used as a constraint/reference value, to determine the travel speed of the first vehicle. For example, the travel speed of the first vehicle is determined by using a numerical optimization algorithm, using the recommended speed as an initial value, and using the speed partition as a constraint/reference value.

In a possible implementation, the determining a travel speed of the first vehicle based on the speed recommendation information of the first vehicle includes: determining the travel speed based on the speed recommendation information of the first vehicle when a risk value of the first vehicle is greater than or equal to a risk threshold, where the risk value of the first vehicle represents a driving risk degree of the first vehicle. A specific value of the risk threshold may be set according to an actual situation, and is not specially limited.

In this embodiment of this application, determining of the risk value of the first vehicle is added, and the risk threshold is used as a determining threshold. The travel speed is determined based on the speed recommendation information of the first vehicle only when the risk value of the first vehicle is greater than or equal to the risk threshold. A possible method for determining the travel speed is provided to meet different scenario requirements and improve driving safety.

In a possible implementation, when the driving environment information includes the driving status information of the traffic participant, the risk value of the first vehicle is a risk value of each traffic participant in the traffic participant, and the risk value of the traffic participant represents a possibility that the traffic participant collides with the first vehicle.

In this case, the determining the travel speed based on the speed recommendation information of the first vehicle when a risk value of the first vehicle is greater than or equal to a risk threshold specifically includes: determining the travel speed based on the speed recommendation information of the first vehicle when a risk value of at least one traffic participant is greater than or equal to the risk threshold.

In this embodiment of this application, the risk value of each traffic participant in the driving environment of the first vehicle is used as the risk value of the first vehicle. The travel speed is determined based on the speed recommendation information of the first vehicle when the risk value of the at least one traffic participant is greater than or equal to the risk threshold. Determining of the travel speed of the first vehicle is started provided that a risk value of one traffic participant meets a condition. In this way, driving safety can be further improved.

In a possible implementation, when the driving environment information includes the driving status information of the traffic participant, the risk value of the first vehicle is obtained based on a risk value of the traffic participant, and the risk value of the traffic participant represents a possibility that the traffic participant collides with the first vehicle.

In this embodiment of this application, the risk value of the first vehicle may be obtained by performing processing based on the risk value of each traffic participant in the driving environment of the first vehicle. The processing includes an addition operation or a weighting operation. For the addition operation, a sum of risk values of traffic participants in the driving environment of the first vehicle is used as the risk value of the first vehicle. For the weighting operation, a specific weight may be assigned to each traffic participant, and then a weighted operation value, that is, the risk value of the first vehicle, may be obtained based on the risk value and the corresponding weight of the traffic participant.

In a possible implementation, the risk value of the traffic participant is a product of an interaction weight of the traffic participant and a risk score of the traffic participant. The interaction weight of the traffic participant represents impact of the traffic participant on the first vehicle. The risk score of the traffic participant is a risk evaluation value obtained based on various driving risk evaluation indicators.

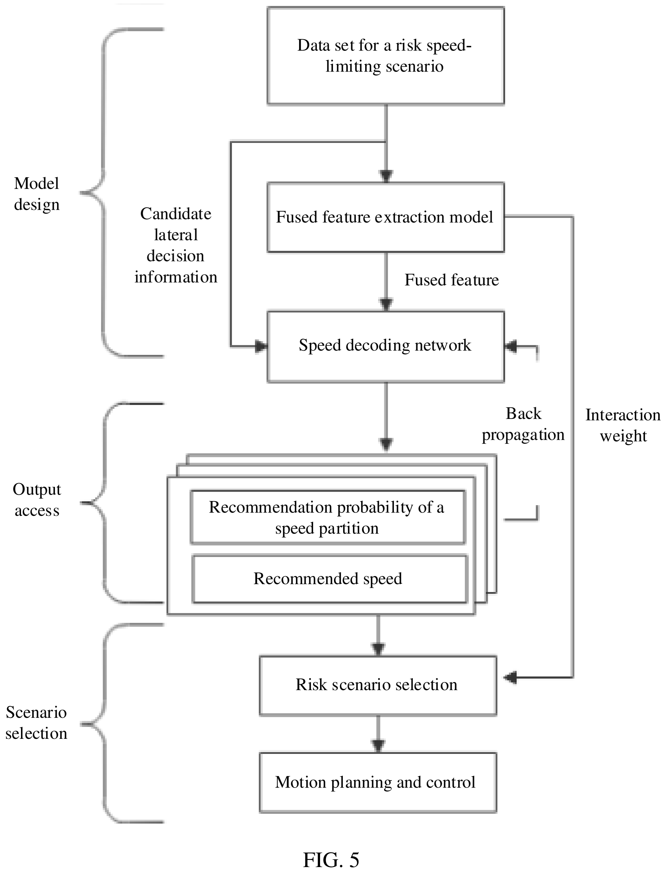

The following specifically describes an application process of the speed recommendation method in embodiments of this application. In embodiments, driving data is used as an input to complete an autonomous driving speed decision in a risk speed reduction scenario. FIG. 5 is a diagram of application of a speed recommendation method according to an embodiment of this application. A fused feature extraction model is used to perform fused feature extraction on input driving data of a first vehicle in a first time period to obtain a fused feature, and process the driving data to obtain a plurality of pieces of candidate lateral decision information of the first vehicle. Then, speed planning prediction is performed based on the fused feature and the candidate lateral decision information by using a speed decoding network, to obtain a recommended speed of the first vehicle at a first moment and a recommendation probability of a speed partition. When it is determined that the first vehicle is in a risk speed reduction scenario, speed planning control is performed based on the recommended speed of the first vehicle and the recommendation probability of the speed partition, to obtain a travel speed of the first vehicle, so as to control travel of the first vehicle. In this embodiment, a plurality of first moments (a plurality of future moments) are used as an example. In other words, during speed planning prediction, a recommended speed trajectory of the first vehicle may be obtained.

A specific implementation process is as follows:

1. Data set construction for a risk speed reduction scenario: Collect and sort out data related to the risk speed reduction scenario. A scenario matching algorithm or scenario label annotation (manually adding a label to driving data) is used to select and collect driving paradigm data related to the risk speed reduction scenario. The driving paradigm data includes driving status information of each traffic participant including an ego vehicle, road topology information, navigation information, and traffic light information. All candidate lateral decision information and the like of the ego vehicle may be determined by using the driving paradigm data.

For example, in the scenario matching algorithm, a plurality of matching parameters may be used to perform driving scenario matching. When the plurality of matching parameters of the vehicle meet a condition of the risk speed reduction scenario, it indicates that the vehicle is in the risk speed reduction scenario.

2. Speed decoding network training: A fused feature is obtained by using a fused feature extraction model based on the data in step 1. The fused feature and the candidate lateral decision information are used to train a speed decoding network. A loss function of the speed decoding network is weighting of a loss function of a speed trajectory regression task and a loss function of a speed partitioning classification task. A parameter of the speed decoding network is updated through back propagation, to train the speed decoding network.

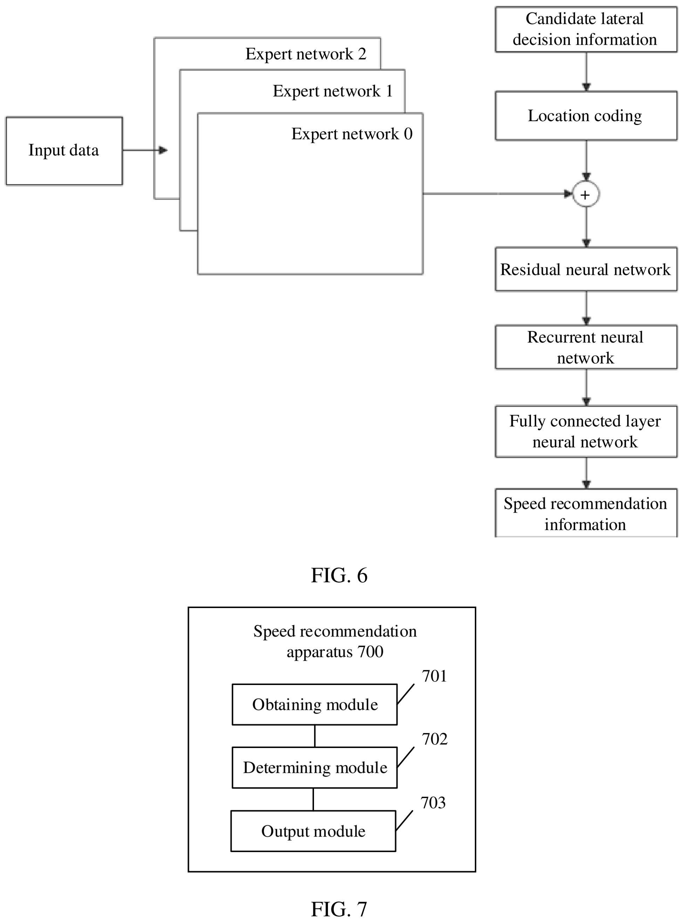

For example, the fused feature extraction model is implemented by using a pre-trained large model. In this embodiment, fine-tuning training is performed based on the pre-trained large model. For example, FIG. 6 is a diagram of a fused feature extraction model and a speed decoding network according to an embodiment of this application. The pre-trained large model is implemented by using a mixture of experts system. The mixture of experts system includes a plurality of expert networks (for example, an expert network 0, an expert network 1, and an expert network 2, where each expert network corresponds to one autonomous driving task). The mixture of experts system is used to perform feature extraction and feature fusion on input data to obtain a fused feature. The input data includes ego vehicle status data, obstacle status data, road topology data, and navigation data. For example, feature extraction is performed on the ego vehicle status data to obtain an ego vehicle feature, feature extraction is performed on the obstacle status data, the road topology data, the navigation data, and the like to obtain other features, and then the other features are fused based on the ego vehicle feature to obtain the fused feature. The fused feature output by the mixture of experts system is transferred to the speed decoding network for speed information decoding.

For example, the speed decoding network is mainly used for speed information decoding. An input of the speed decoding network includes the fused feature of the mixture of experts system and the candidate lateral decision information of the ego vehicle, and an output includes speed recommendation information of the ego vehicle, for example, a recommended speed trajectory of the ego vehicle and a recommendation probability of a speed partition. Because a data set for the risk speed reduction scenario is human driving behavior data, the speed decoding network obtained through training based on the data set for the risk speed reduction scenario has a human-like speed planning capability and may provide a human-like speed planning service.

Further, for example, with reference to FIG. 6, the speed decoding network includes a multi-layer perceptron (Multi-Layer Perceptron, MLP), a residual neural network (ResidualNet, Res-Net), a recurrent neural network (Recurrent Neural Network, RNN), and a fully connected layer neural network (Fully Connected Layer, FC). The foregoing network modules are cascaded. The MLP is used to perform location encoding on the candidate lateral decision information, to improve prediction precision of the speed recommendation information. For example, the RNN may be implemented by using a gated recurrent unit (Gated Recurrent Unit, GRU).

For another example, the residual neural network of the speed decoding network in FIG. 6 may be removed, or two or three residual neural networks may be set. The speed decoding network may alternatively be implemented by using another network structure. This is not specially limited.

Before the speed decoding network is trained, the recommended speed trajectory and the speed partition are defined. With reference to FIG. 4, the recommended speed trajectory is defined as a set of values of recommended speeds of the ego vehicle at an equal time interval (an equal spacing is used as an example in this embodiment) in a future time period. In addition, a data set for a risk speed-limiting scenario includes a future true-value speed trajectory $v_1, v_2, ..., v_n$ of the ego vehicle obtained through a recording device, where n is a quantity of first moments. Training of the recommended speed output by the speed decoding network may be implemented by using the true-value speed trajectory. For example, when true speed data of a curve B is used for network training, for example, a current moment is a moment 0, speeds at a moment 1 to a moment 5 are speeds at future moments. The speed decoding network may perform speed recommendation prediction based on data at the moment 0, and then compare a recommended speed (that is, a predicted value) of the speed decoding network with a true value, to complete training of the speed decoding network.

In addition, with reference to FIG. 4, a definition of the speed partition is as follows: A current speed of the ego vehicle is used as a center, upper and lower limits of speed space at a future moment point are determined based on a maximum longitudinal acceleration and a minimum longitudinal acceleration of the ego vehicle, and the speed space is divided into speed partitions 1, 2, ... , M at an equal spacing based on specific resolution.

When the speed decoding network is trained by using the data set for the risk speed-limiting scenario, a parameter weight of the speed decoding network is updated through back propagation by calculating a loss function.

The loss function of the recommended speed trajectory is first calculated. An output of the speed decoding network with respect to the recommended speed trajectory includes an average value and a variance of a recommended speed:

$$(\mu_1, \sigma_1), \ (\mu_2, \sigma_2), ..., \ (\mu_n, \sigma_n).$$

For example, a Gaussian negative log likelihood loss (Gaussian Negative Log Likelihood Loss) function is used as the loss function, as shown in Formula (1):

$$L_1 = -\frac{1}{2}\left(\log(\sigma_i) + \frac{(v_i - \mu_i)^2}{\sigma_i}\right) \ (1)$$

It is calculated, by using the true-value speed trajectory, that the ego vehicle is in an $N^{th}$ speed interval after several seconds in the future, to obtain a recommendation probability of the speed partition:

$$\hat{y}_i = \begin{cases} 1 \ i = N \\ 0 \ i \neq N \end{cases} \ i = 1,2, ..., M$$

An output of the speed decoding network with respect to the recommendation probability of the speed partition includes probabilities of the speed partitions 1, 2, ... , M, for example:

$$y_1, y_2, ..., y_M$$

For example, cross entropy (Cross Entropy) is used as the loss function, as shown in Formula (2):

$$L_2 = -\frac{1}{m}\sum_{i=1}^{M} y_i \log(\hat{y}_i) \quad (2)$$

The loss function of the speed decoding network is calculated as a weighting operation function of a loss function of each task, as shown in Formula (3):

$$L_{total} = w_1 L_1 + w_2 L_2 \quad (3)$$

$w_1$ is a weight of the loss function of the recommended speed trajectory, $w_2$ is a weight of the loss function of the recommendation probability of the speed partition, and $L_{total}$ is used to update the parameter weight of the speed decoding network through back propagation.

3. Model output access: The output of the speed decoding network includes a recommendation probability of a sparse speed partition and recommended speeds of dense moment points, which both jointly inspire motion planning and control.

4. Risk scenario selection: In step 2, an interaction weight between the ego vehicle and another vehicle can be obtained through the pre-trained large model. A potential lateral conflict scenario is selected based on a risk scoring mechanism of an expert system, to determine whether the speed decoding network works.

Interaction weights $w_i$ between the ego vehicle and obstacles 1, 2, ... , o are obtained based on the pre-trained large model. For example, a consideration dimension of the expert system may include at least one of the following: a minimum buffer distance, lateral and longitudinal accelerations, jerk (differential of the acceleration), reaction time (execution reaction time of a vehicle, for both the ego vehicle and the obstacle), and the like, and a risk score $r_i$ is performed on each obstacle. A risk value $R_i$ of the obstacle is obtained by combining the consideration dimension and the risk score, as shown in Formula (4):

$$R_i = w_i r_i, i = 1, 2, ..., o \quad (4)$$

When $R_i$ of an obstacle in the scenario is greater than a risk threshold $T_{risk}$, the recommendation probability of the sparse speed partition and the dense recommended speed trajectory are accessed to perform motion planning and control, and a travel speed of the ego vehicle is determined.

It can be learned that embodiments of this application provide an autonomous driving deep learning speed decision-making method for an object with a potential trajectory conflict. On the premise of considering lateral decision-making and risk determining, a self-supervised learning task is provided, and a human driving data interaction mode is fully used, to obtain a human-like safety and comfort longitudinal policy. Compared with a rule-based risk speed-limiting algorithm, this does not rely on expert experience and avoids a manual parameter adjustment process. Compared with another learning-based risk speed-limiting algorithm, the speed recommendation information in embodiments of this application is richer, a self-supervised learning policy is used to avoid manual marking of a scenario risk level, and a speed output keeps self-consistent with lateral planning of the ego vehicle.

In embodiments of this application, step numbers are merely used to distinguish between different steps, and do not limit a sequence of performing the steps.

The following describes an apparatus provided in embodiments of this application.

FIG. 7 is a diagram of a possible structure of an apparatus according to an embodiment of this application. The apparatus may be configured to implement a function of the speed recommendation method in the foregoing method embodiment, and therefore can also implement beneficial effects of the foregoing method embodiment. In this embodiment of this application, the apparatus may be an electronic device, or may be a module (for example, a chip) used in the electronic device.

As shown in FIG. 7, the speed recommendation apparatus 700 includes an obtaining module 701 and a determining module 702. The speed recommendation apparatus 700 is configured to implement a function of the method embodiment shown in FIG. 3. Alternatively, the speed recommendation apparatus 700 may include a module configured to implement any function or operation in the method embodiment shown in FIG. 3. The module may be all or partially implemented by using software, hardware, firmware, or any combination thereof.

When the speed recommendation apparatus 700 is configured to implement a function in the method embodiment shown in FIG. 3, the obtaining module 701 is configured to obtain driving data of a first vehicle in a first time period. The determining module 702 is configured to determine speed recommendation information of the first vehicle based on the driving data. The speed recommendation information is obtained based on a fused feature and lateral decision information of the first vehicle, the fused feature is obtained by performing fused feature extraction on the driving data, and the lateral decision information is obtained based on the driving data.

In this embodiment of this application, the speed recommendation apparatus 700 obtains the fused feature and the lateral decision information of the first vehicle by using the driving data of the first vehicle, to determine the speed recommendation information of the first vehicle based on the fused feature and the lateral decision information. Because the driving data of the first vehicle is human driving behavior data, the speed recommendation apparatus in this embodiment of this application may provide a human-like speed planning service, to obtain the speed recommendation information of the first vehicle, and the speed recommendation information may be used to implement human-like driving control. This effectively helps improve traffic efficiency, and can also ensure driving safety.

In a possible implementation, the speed recommendation apparatus 700 further includes an output module 703.

The output module 703 is configured to output the speed recommendation information of the first vehicle.

In a possible implementation, the driving data includes driving status information and driving environment information of the first vehicle.

In a possible implementation, the driving environment information includes at least one of the following: road topology information, traffic light information, and driving status information of a traffic participant.

In a possible implementation, the driving data further includes an expected travel path of the first vehicle.

In a possible implementation, the speed recommendation information includes a recommended speed corresponding to a first moment and/or a recommendation probability of a speed partition corresponding to the first moment. The first moment is after the first time period.

The speed partition is obtained by dividing a speed interval based on a preset spacing, the speed interval is a speed range determined based on a time length, a speed of the first vehicle at a cut-off moment of the first time period, a maximum longitudinal acceleration of the first vehicle, and a minimum longitudinal acceleration of the first vehicle, the time length is a difference between the first moment and the cut-off moment, and the recommendation probability of the speed partition is a probability that a speed constraint interval of the first vehicle at the first moment is in the speed partition.

In a possible implementation, the speed recommendation apparatus 700 further includes:
a control module, configured to determine a travel speed of the first vehicle based on the speed recommendation information of the first vehicle.

In a possible implementation, in the aspect of determining the travel speed of the first vehicle based on the speed recommendation information of the first vehicle, the control module is specifically configured to:
determine the travel speed based on the speed recommendation information of the first vehicle when a risk value of the first vehicle is greater than or equal to a risk threshold, where the risk value of the first vehicle represents a driving risk degree of the first vehicle.

In a possible implementation, when the driving environment information includes the driving status information of the traffic participant, the risk value of the first vehicle is a risk value of each traffic participant in the traffic participant, and the risk value of the traffic participant represents a possibility that the traffic participant collides with the first vehicle.

Correspondingly, in the aspect of determining the travel speed based on the speed recommendation information of the first vehicle when the risk value of the first vehicle is greater than or equal to the risk threshold, the control module is specifically configured to:
determine the travel speed based on the speed recommendation information of the first vehicle when a risk value of at least one traffic participant is greater than or equal to the risk threshold.

In a possible implementation, when the driving environment information includes the driving status information of the traffic participant, the risk value of the first vehicle is obtained based on a risk value of the traffic participant, and the risk value of the traffic participant represents a possibility that the traffic participant collides with the first vehicle.

In a possible implementation, the risk value of the traffic participant is a product of an interaction weight of the traffic participant and a risk score of the traffic participant. The interaction weight of the traffic participant represents impact of the traffic participant on the first vehicle. The risk score of the traffic participant is a risk evaluation value obtained based on various driving risk evaluation indicators.

In a possible implementation, when the driving environment information includes the driving status information of the traffic participant, the determining module is further configured to: before determining the speed recommendation information of the first vehicle, determine the lateral decision information of the first vehicle based on the driving data and a predicted travel path of the traffic participant at the first moment, where the predicted travel path is determined based on the driving data, and the first moment is after the first time period.

In a possible implementation, the speed recommendation information of the first vehicle includes N pieces of speed recommendation information, where N is an integer greater than or equal to 1; and in the aspect of determining the speed recommendation information of the first vehicle based on the driving data, the determining module is specifically configured to:
determine N pieces of candidate lateral decision information of the first vehicle based on the driving data; and obtain, based on the fused feature and the N pieces of candidate lateral decision information, the N pieces of speed recommendation information respectively corresponding to the N pieces of candidate lateral decision information.

In a possible implementation, in the aspect of determining the speed recommendation information of the first vehicle based on the driving data, the determining module is specifically configured to:

determine N pieces of candidate lateral decision information of the first vehicle based on the driving data, where N is an integer greater than or equal to 1;

obtain, based on the fused feature and the N pieces of candidate lateral decision information, N pieces of speed recommendation information respectively corresponding to the N pieces of candidate lateral decision information; and

determine that one piece of speed recommendation information corresponding to the lateral decision information of the first vehicle in the N pieces of speed recommendation information is the speed recommendation information of the first vehicle.

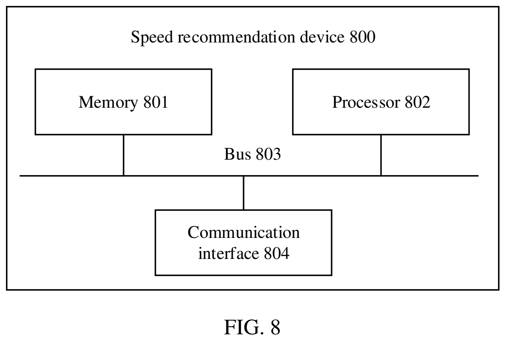

FIG. 8 is a diagram of a structure of a speed recommendation device according to an embodiment of this application. The speed recommendation device 800 (the device 800 may be specifically a computer device) shown in FIG. 8 includes a memory 801, a processor 802, a communication interface 804, and a bus 803. The memory 801, the processor 802, and the communication interface 804 are communicatively connected to each other through the bus 803.

The memory 801 may be a read-only memory (Read-Only Memory, ROM), a static storage device, a dynamic storage device, or a random access memory (Random Access Memory, RAM). The memory 801 may store a program. When the program stored in the memory 801 is executed by the processor 802, the processor 802 and the communication interface 804 are configured to perform the steps of the speed recommendation method in embodiments of this application.

The processor 802 may be a general-purpose central processing unit (Central Processing Unit, CPU), a microprocessor, an application-specific integrated circuit (Application-specific Integrated Circuit, ASIC), a graphics processing unit (graphics processing unit, GPU), or one or more integrated circuits, and is configured to execute a related program, to implement a function that needs to be performed by a module included in the speed recommendation apparatus in embodiments of this application, or perform the speed recommendation method in the method embodiment of this application.

The processor 802 may alternatively be an integrated circuit chip and has a signal processing capability. In an implementation process, the steps of the speed recommendation method in embodiments of this application may be implemented by using a hardware integrated logic circuit in the processor 802, or by using instructions in a form of software. The processor 802 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the speed recommendation method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 801. The processor 802 reads information from the memory 801, and in combination with hardware of the processor 802, performs a function that needs to be performed by a module included in the speed recommendation apparatus in embodiments of this application, or perform the speed recommendation method in the method embodiment of this application.

The communication interface 804 is but is not limited to a transceiver apparatus such as a transceiver, to implement communication between the speed recommendation device 800 and another device or a communication network. For example, driving data may be obtained through the communication interface 804.

The bus 803 may include a path for transmitting information between the components (for example, the memory 801, the processor 802, and the communication interface 804) of the speed recommendation device 800.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A speed recommendation method, wherein the method comprises:

   obtaining driving data of a first vehicle in a first time period; and
   determining speed recommendation information of the first vehicle based on the driving data, wherein
   the speed recommendation information is obtained based on a fused feature and lateral decision information of the first vehicle, the fused feature is obtained by performing fused feature extraction on the driving data, and the lateral decision information is obtained based on the driving data.

2. The method according to claim 1, wherein the method further comprises:
   outputting the speed recommendation information of the first vehicle.

3. The method according to claim 1 or 2, wherein the driving data comprises driving status information and driving environment information of the first vehicle.

4. The method according to claim 3, wherein the driving environment information comprises at least one of the following: road topology information, traffic light information, and driving status information of a traffic participant.

5. The method according to any one of claims 1 to 4, wherein the driving data further comprises an expected travel path of the first vehicle.

6. The method according to any one of claims 1 to 5, wherein the speed recommendation information comprises a recommended speed corresponding to a first moment and/or a recommendation probability of a speed partition corresponding to the first moment;

   the first moment is after the first time period; and the speed partition is obtained by dividing a speed interval based on a preset spacing, the speed interval is a speed range determined based on a time length, a speed of the first vehicle at a cut-off moment of the first time period, a maximum longitudinal acceleration of the first vehicle, and a minimum longitudinal acceleration of the first vehicle, the time length is a difference between the first moment and the cut-off moment, and the recommendation probability of the speed partition is a probability that a speed constraint interval of the first vehicle at the first moment is in the speed partition.

7. The method according to any one of claims 1 to 6, wherein the method further comprises:
   determining a travel speed of the first vehicle based on the speed recommendation information of the first vehicle.

8. The method according to claim 7, wherein the determining a travel speed of the first vehicle based on the speed recommendation information of the first vehicle comprises:
   determining the travel speed based on the speed recommendation information of the first vehicle when a risk value of the first vehicle is greater than or equal to a risk threshold, wherein the risk value of the first vehicle represents a driving risk degree of the first vehicle.

9. The method according to claim 8, wherein when the driving environment information comprises the driving status information of the traffic participant, the risk value of the first vehicle is a risk value of each traffic participant in the traffic participant, and the risk value of the traffic participant represents a possibility that the traffic participant collides with the first vehicle; and

   the determining the travel speed based on the speed recommendation information of the first vehicle when a risk value of the first vehicle is greater than or equal to a risk threshold comprises:
   determining the travel speed based on the speed recommendation information of the first vehicle when a risk value of at least one traffic participant is greater than or equal to the risk threshold.

10. The method according to claim 8, wherein when the driving environment information comprises the driving status information of the traffic participant, the risk value of the first vehicle is obtained based on a risk value of the traffic participant, and the risk value of the traffic participant represents a possibility that the traffic participant collides with the first vehicle.

11. The method according to claim 9 or 10, wherein the risk value of the traffic participant is a product of an interaction weight of the traffic participant and a risk score of the traffic participant, the interaction weight of the traffic participant represents impact of the traffic participant on the first vehicle, and the risk score of the traffic participant is a risk evaluation value obtained based on various driving risk evaluation indicators.

12. The method according to any one of claims 1 to 11, wherein when the driving environment information comprises the driving status information of the traffic participant, before the determining speed recommendation information of the first vehicle, the method further comprises:
    determining the lateral decision information of the first vehicle based on the driving data and a predicted travel path of the traffic participant at the first moment, wherein the predicted travel path is determined based on the driving data, and the first moment is after the first time period.

13. The method according to any one of claims 1 to 11, wherein the speed recommendation information of the first vehicle comprises N pieces of speed recommendation information, wherein N is an integer greater than or equal to 1; and the determining speed recommendation information of the first vehicle based on the driving data comprises:

   determining N pieces of candidate lateral decision information of the first vehicle based on the driving data; and
   obtaining, based on the fused feature and the N pieces of candidate lateral decision information, the N pieces of speed recommendation information respectively corresponding to the N pieces of candidate lateral decision information.

14. The method according to any one of claims 1 to 11, wherein the determining speed recommendation information of the first vehicle based on the driving data comprises:

   determining N pieces of candidate lateral decision information of the first vehicle based on the driving data, wherein N is an integer greater than or equal to 1;
   obtaining, based on the fused feature and the N pieces of candidate lateral decision information, N pieces of speed recommendation information respectively corresponding to the N pieces of candidate lateral decision information; and
   determining that one piece of speed recommendation information corresponding to the lateral decision information of the first vehicle in the N pieces of speed recommendation information is the speed recommendation information of the first vehicle.

15. A speed recommendation apparatus, comprising:

   an obtaining module, configured to obtain driving data of a first vehicle in a first time period; and
   a determining module, configured to determine speed recommendation information of the first vehicle based on the driving data, wherein
   the speed recommendation information is obtained based on a fused feature and lateral decision information of the first vehicle, the fused feature is obtained by performing fused feature extraction on the driving data, and the lateral decision information is obtained based on the driving data.

16. The apparatus according to claim 15, wherein the apparatus further comprises:
    an output module, configured to output the speed recommendation information of the first vehicle.

17. The apparatus according to claim 15 or 16, wherein the driving data comprises driving status information and driving environment information of the first vehicle.

**18.** The apparatus according to claim 17, wherein the driving environment information comprises at least one of the following: road topology information, traffic light information, and driving status information of a traffic participant.

**19.** The apparatus according to any one of claims 15 to 18, wherein the driving data further comprises an expected travel path of the first vehicle.

**20.** The apparatus according to any one of claims 15 to 19, wherein the speed recommendation information comprises a recommended speed corresponding to a first moment and/or a recommendation probability of a speed partition corresponding to the first moment;

the first moment is after the first time period; and the speed partition is obtained by dividing a speed interval based on a preset spacing, the speed interval is a speed range determined based on a time length, a speed of the first vehicle at a cut-off moment of the first time period, a maximum longitudinal acceleration of the first vehicle, and a minimum longitudinal acceleration of the first vehicle, the time length is a difference between the first moment and the cut-off moment, and the recommendation probability of the speed partition is a probability that a speed constraint interval of the first vehicle at the first moment is in the speed partition.

**21.** The apparatus according to any one of claims 15 to 20, wherein the apparatus further comprises:
a control module, configured to determine a travel speed of the first vehicle based on the speed recommendation information of the first vehicle.

**22.** The apparatus according to claim 21, wherein in the aspect of determining the travel speed of the first vehicle based on the speed recommendation information of the first vehicle, the control module is specifically configured to:
determine the travel speed based on the speed recommendation information of the first vehicle when a risk value of the first vehicle is greater than or equal to a risk threshold, wherein the risk value of the first vehicle represents a driving risk degree of the first vehicle.

**23.** The apparatus according to claim 22, wherein when the driving environment information comprises the driving status information of the traffic participant, the risk value of the first vehicle is a risk value of each traffic participant in the traffic participant, and the risk value of the traffic participant represents a possibility that the traffic participant collides with the first vehicle; and

in the aspect of determining the travel speed based on the speed recommendation information of the first vehicle when the risk value of the first vehicle is greater than or equal to the risk threshold, the control module is specifically configured to:
determine the travel speed based on the speed recommendation information of the first vehicle when a risk value of at least one traffic participant is greater than or equal to the risk threshold.

**24.** The apparatus according to claim 23, wherein when the driving environment information comprises the driving status information of the traffic participant, the risk value of the first vehicle is obtained based on a risk value of the traffic participant, and the risk value of the traffic participant represents a possibility that the traffic participant collides with the first vehicle.

**25.** The apparatus according to claim 23 or 24, wherein the risk value of the traffic participant is a product of an interaction weight of the traffic participant and a risk score of the traffic participant, the interaction weight of the traffic participant represents impact of the traffic participant on the first vehicle, and the risk score of the traffic participant is a risk evaluation value obtained based on various driving risk evaluation indicators.

**26.** The apparatus according to any one of claims 15 to 25, wherein when the driving environment information comprises the driving status information of the traffic participant, the determining module is further configured to: before determining the speed recommendation information of the first vehicle, determine the lateral decision information of the first vehicle based on the driving data and a predicted travel path of the traffic participant at the first moment, wherein the predicted travel path is determined based on the driving data, and the first moment is after the first time period.

**27.** The apparatus according to any one of claims 15 to 25, wherein the speed recommendation information of the first vehicle comprises N pieces of speed recommendation information, wherein N is an integer greater than or equal to 1; and in the aspect of determining the speed recommendation information of the first vehicle based on the driving data, the determining module is specifically configured to:

determine N pieces of candidate lateral decision information of the first vehicle based on the driving data; and
obtain, based on the fused feature and the N pieces of candidate lateral decision information, the N pieces of speed recommendation information respectively corresponding to the N pieces of candidate lateral decision information.

28. The apparatus according to any one of claims 15 to 25, wherein in the aspect of determining the speed recommendation information of the first vehicle based on the driving data, the determining module is specifically configured to:

   determine N pieces of candidate lateral decision information of the first vehicle based on the driving data, wherein N is an integer greater than or equal to 1;
   obtain, based on the fused feature and the N pieces of candidate lateral decision information, N pieces of speed recommendation information respectively corresponding to the N pieces of candidate lateral decision information; and
   determine that one piece of speed recommendation information corresponding to the lateral decision information of the first vehicle in the N pieces of speed recommendation information is the speed recommendation information of the first vehicle.

29. A speed recommendation device, comprising a processor and a memory, wherein the processor is connected to the memory, the memory is configured to store program code, and the processor is configured to invoke the program code, to perform the speed recommendation method according to any one of claims 1 to 14.

30. A computer-readable storage medium, wherein the computer-readable storage medium stores a computer program, and the computer program is executed by a processor, to implement the speed recommendation method according to any one of claims 1 to 14.

FIG. 1

Expected travel path

Sensor → Obtaining module → Determining module → Control module → Control instruction

Obstacle prediction

Obstacle decision-making

Lateral planning for an ego vehicle

Longitudinal planning for the ego vehicle

FIG. 2

Obtain driving data of a first vehicle in a first time period — 301

Determine speed recommendation information of the first vehicle based on the driving data — 302

Output the speed recommendation information of the first vehicle — 303

FIG. 3

FIG. 4

FIG. 5

Input data → Expert network 2 / Expert network 1 / Expert network 0

Candidate lateral decision information → Location coding → (+) ← Expert network 0

(+) → Residual neural network → Recurrent neural network → Fully connected layer neural network → Speed recommendation information

FIG. 6

Speed recommendation apparatus 700

Obtaining module — 701

Determining module — 702

Output module — 703

FIG. 7

Speed recommendation device 800

Memory 801

Processor 802

Bus 803

Communication interface 804

FIG. 8

## INTERNATIONAL SEARCH REPORT

| International application No. |
| --- |
| **PCT/CN2024/072505** |

| A. | CLASSIFICATION OF SUBJECT MATTER |
| --- | --- |

B60W60/00(2020.01)i

According to International Patent Classification (IPC) or to both national classification and IPC

| B. | FIELDS SEARCHED |
| --- | --- |

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, ENTXTC, CNABS, CNKI: 车速, 速度, 推荐, 目标, 参考, 驾驶数据, 路径, 轨迹, 融合, 交通参与者, 行人; ENTXT, DWPI, VEN, USTXT: vehicle, speed, recommend, target, reference, track, path, data, combine, passerby.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 20190068037 A (HYUNDAI MOTOR CO., LTD. et al.) 18 June 2019 (2019-06-18) description, paragraphs 30-51 | 1-5, 7-12, 15-19, 21-26, 29-30 |
| X | CN 115273512 A (CHONGQING CHANG'AN AUTOMOBILE CO., LTD.) 01 November 2022 (2022-11-01) description, paragraph 5 | 1-5, 7-12, 15-19, 21-26, 29-30 |
| X | KR 20200101517 A (KOREA AUTOMOTIVE TECHNOLOGY INSTITUTE) 28 August 2020 (2020-08-28) description, paragraphs 42-44 | 1-5, 7-12, 15-19, 21-26, 29-30 |
| A | CN 112242069 A (HUAWEI TECHNOLOGIES CO., LTD.) 19 January 2021 (2021-01-19) entire document | 1-30 |
| A | CN 113954880 A (GUANGZHOU WERIDE TECHNOLOGY CO., LTD.) 21 January 2022 (2022-01-21) entire document | 1-30 |
| A | CN 115053276 A (QUALCOMM INC.) 13 September 2022 (2022-09-13) entire document | 1-30 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 April 2024** | **12 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/072505** |

**C.    DOCUMENTS CONSIDERED TO BE RELEVANT**

| Category* | Citation of document, with indication, where appropriate, of the relevant passages | Relevant to claim No. |
|---|---|---|
| A | CN 115273498 A (HUAWEI TECHNOLOGIES CO., LTD.) 01 November 2022 (2022-11-01) entire document | 1-30 |
| A | US 2011208399 A1 (TECHNISCHE UNIVERSITAET BRAUNSCHWEIG) 25 August 2011 (2011-08-25) entire document | 1-30 |

Form PCT/ISA/210 (second sheet) (July 2022)

EP 4 685 027 A1

## INTERNATIONAL SEARCH REPORT
### Information on patent family members

| International application No. |
| --- |
| **PCT/CN2024/072505** |

| Patent document cited in search report | | | Publication date (day/month/year) | Patent family member(s) | | | Publication date (day/month/year) |
| --- | --- | --- | --- | --- | --- | --- | --- |
| KR | 20190068037 | A | 18 June 2019 | KR | 102506863 | B1 | 08 March 2023 |
| CN | 115273512 | A | 01 November 2022 | None | | | |
| KR | 20200101517 | A | 28 August 2020 | KR | 102303716 | B1 | 23 September 2021 |
| CN | 112242069 | A | 19 January 2021 | CN | 112242069 | B | 01 October 2021 |
| | | | | WO | 2021008605 | A1 | 21 January 2021 |
| | | | | US | 2021276572 | A1 | 09 September 2021 |
| | | | | EP | 3882095 | A1 | 22 September 2021 |
| | | | | JP | 2022506404 | W | 17 January 2022 |
| | | | | IN | 202137016006 | A | 21 January 2022 |
| | | | | US | 11273838 | B2 | 15 March 2022 |
| | | | | JP | 7200371 | B2 | 06 January 2023 |
| | | | | IN | 431426 | B | 12 May 2023 |
| CN | 113954880 | A | 21 January 2022 | CN | 113954880 | B | 03 November 2023 |
| CN | 115053276 | A | 13 September 2022 | WO | 2021142781 | A1 | 22 July 2021 |
| | | | | TW | 202133643 | A | 01 September 2021 |
| | | | | IN | 202247037807 | A | 08 July 2022 |
| | | | | BR | 112022013666 | A2 | 13 September 2022 |
| | | | | KR | 20220124186 | A | 13 September 2022 |
| | | | | VN | 90220 | A | 25 October 2022 |
| | | | | EP | 4091149 | A1 | 23 November 2022 |
| | | | | US | 2023036475 | A1 | 02 February 2023 |
| | | | | JP | 2023517799 | W | 27 April 2023 |
| CN | 115273498 | A | 01 November 2022 | None | | | |
| US | 2011208399 | A1 | 25 August 2011 | WO | 2010028626 | A1 | 18 March 2010 |
| | | | | ATE | 555463 | T1 | 15 May 2012 |
| | | | | DE | 102008047143 | A1 | 25 March 2010 |
| | | | | DE | 102008047143 | B4 | 09 September 2010 |
| | | | | US | 8666629 | B2 | 04 March 2014 |
| | | | | EP | 2335233 | A1 | 22 June 2011 |
| | | | | EP | 2335233 | B1 | 25 April 2012 |

Form PCT/ISA/210 (patent family annex) (July 2022)

**EP 4 685 027 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310365649